# DEMANDE DE BREVET EUROPEEN

(11) **EP 3 587 784 A1**
(43) Date de publication de la demande: **01.01.2020**
(21) Numéro de dépôt: 19181588.5
(22) Date de dépôt: 21.06.2019
(51) Int. Cl.: F02K 1/70, F02K 1/72, F02K 1/76

(54) **TURBOREACTEUR COMPORTANT UNE NACELLE EQUIPEE DE VOLETS INVERSEURS POURVUS DE MOYENS POUR GENERER DES TOURBILLONS**

(30) Priorité: 26.06.2018 FR 1855688
(71) Demandeur: Airbus Operations (S.A.S.), 31060 Toulouse Cedex 9 (FR)
(72) Inventeur: GARDES, Pascal, 31060 TOULOUSE (FR); RIDRAY, Frédéric, 31060 TOULOUSE (FR); CZAPLA, Lionel, 31060 TOULOUSE (FR)
(74) Mandataire: Cabinet Le Guen Maillet

(57) **Abrégé**

L'invention concerne un turboréacteur double flux comportant un moteur et une nacelle entourant le moteur, où une veine d'un flux secondaire est délimitée entre la nacelle et le moteur et dans laquelle un flux d'air circule, ladite nacelle comportant des volets inverseurs où chacun est articulé entre une position stockée dans laquelle il n'est pas dans la veine secondaire et une position déployée dans laquelle il est en travers de la veine secondaire, le turboréacteur double flux étant caractérisé en ce qu'au moins un volet inverseur présente au moins une fenêtre de fuite (410) réalisée par un trou qui traverse ledit volet inverseur et prévue pour autoriser l'écoulement de l'air en position déployée, et en ce que ledit au moins un volet inverseur présente au moins une ailette (712) s'étendant en travers de ladite fenêtre de fuite (410), où chaque ailette (712) prend la forme d'un premier plan (712a) et d'un deuxième plan (712b) dans le prolongement du premier plan (712), en ce que le premier plan (712a) est perpendiculaire au plan du volet inverseur (104) et est limité par les faces percées du volet inverseur (104), et en ce que le deuxième plan (712b) est incliné par rapport au plan du volet inverseur (104) et il s'étend à partir et au-delà de la face percée du volet inverseur (104) qui est orientée vers l'arrière.

## Description

### DOMAINE TECHNIQUE

La présente invention concerne un turboréacteur double flux qui comporte une nacelle équipée d'une pluralité de volets inverseurs pourvus de moyens pour générer des tourbillons, ainsi qu'un aéronef comportant au moins un tel turboréacteur double flux.

### ETAT DE LA TECHNIQUE ANTERIEURE

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur et une soufflante qui est disposée à l'avant du moteur. La nacelle et le moteur délimitent une veine secondaire à travers lequel l'air s'écoule de l'avant vers l'arrière en traversant la soufflante pour générer la poussée.

La nacelle comporte une pluralité de volets inverseurs. Les volets inverseurs sont disposés autour de la veine secondaire et chacun est mobile en rotation sur la structure de la nacelle entre une position stockée dans laquelle il est hors de la veine secondaire et une position déployée dans laquelle il se positionne en travers de la veine secondaire pour dévier le flux d'air de la veine secondaire vers l'extérieur à travers des fenêtres prévues à cet effet. Généralement, on trouve logée dans la fenêtre, une grille (« cascade » en terminologie Anglo-Saxonne) qui permet de redresser le flux d'air secondaire vers l'avant de la nacelle afin de produire une contre-poussée.

Du fait de la puissance de la soufflante, l'air qui s'écoule dans la veine secondaire présente une grande vitesse.

Du fait des jeux de fonctionnement autour de chaque volet inverseur, il existe des passages à travers lesquels l'air peut s'insinuer pour s'écouler vers l'arrière lorsque les volets inverseurs sont en position déployée.

Les documents US-A-5,937,636, FR-A-3 018 863, US-A-2014/137541 et USA-3,568,930 divulguent certains modes de réalisation pour des fenêtres de fuite de volets inverseurs.

Ces fuites et la grande vitesse de l'air entraînent l'existence d'une poussée résiduelle à l'arrière du turboréacteur qui est contraire à l'effet de freinage recherché par le déploiement des volets inverseurs et il est donc souhaitable de trouver une solution qui permet de limiter l'effet de ces fuites.

### EXPOSE DE L'INVENTION

Un objet de la présente invention est de proposer un turboréacteur double flux qui comporte une nacelle équipée d'une pluralité de volets inverseurs pourvus de moyens pour générer des tourbillons.

A cet effet, est proposé un turboréacteur double flux comportant un moteur et une nacelle entourant le moteur, où une veine d'un flux secondaire est délimitée entre la nacelle et le moteur et dans laquelle un flux d'air circule, ladite nacelle comportant des volets inverseurs où chacun est articulé entre une position stockée dans laquelle il n'est pas dans la veine secondaire et une position déployée dans laquelle il est en travers de la veine secondaire, le turboréacteur double flux étant caractérisé en ce qu'au moins un volet inverseur présente au moins une fenêtre de fuite prévue pour autoriser l'écoulement de l'air en position déployée, et en ce que ledit au moins un volet inverseur présente au moins une ailette s'étendant en travers de ladite fenêtre de fuite, où la fenêtre de fuite est réalisée par un trou qui traverse ledit volet inverseur, le turboréacteur double flux étant caractérisé en ce que chaque ailette prend la forme d'un premier plan et d'un deuxième plan dans le prolongement du premier plan, en ce que le premier plan est perpendiculaire au plan du volet inverseur et est limité par les faces percées du volet inverseur, et en ce que le deuxième plan est incliné par rapport au plan du volet inverseur et il s'étend à partir et au-delà de la face percée du volet inverseur qui est orientée vers l'arrière.

Un tel turboréacteur permet de réduire l'effet des fuites autour des volets inverseurs par la présence des ailettes qui transforment les flux d'air issus des fuites en tourbillons présentant peu d'énergie.

Avantageusement, la fenêtre de fuite prend la forme d'une encoche qui traverse ledit volet inverseur au niveau d'un bord aval du volet inverseur.

Avantageusement, la fenêtre de fuite est réalisée par un trou qui traverse ledit volet inverseur au niveau d'une partie centrale du volet inverseur.

L'invention propose également un aéronef comportant au moins un turboréacteur double flux selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant un turboréacteur selon l'invention,
la Fig. 2 est une vue en perspective du turboréacteur selon l'invention,
la Fig. 3 est une vue de côté et en coupe du turboréacteur en position déployée,
la Fig. 4 est une vue de face en position déployée de volets inverseurs selon un mode de réalisation particulier de l'invention,
la Fig. 5 est une vue similaire à celle de la Fig. 4 pour un autre mode de réalisation de l'invention,
la Fig. 6 est une vue similaire à celle de la Fig. 4 pour un autre mode de réalisation de l'invention, et
la Fig. 7 est une vue en coupe selon la ligne V-V de la Fig. 4 d'un volet inverseur selon l'invention.

### EXPOSE DETAILLE DE MODES DE REALISATION

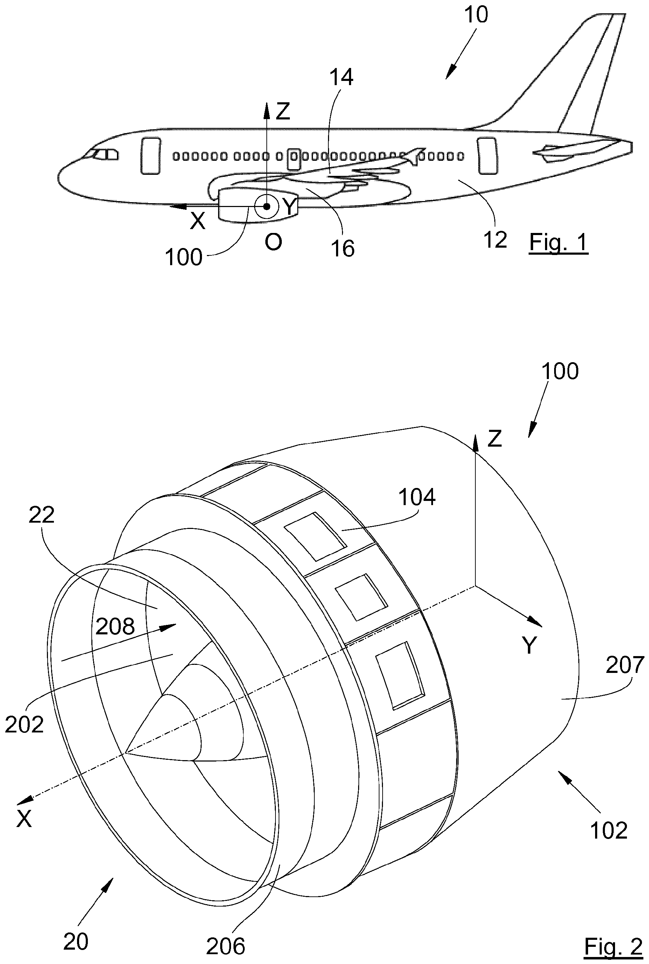

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

La Fig. 2 montre le turboréacteur double flux 100 qui présente une nacelle 102 et un moteur 20 qui est logé à l'intérieur de la nacelle 102 et qui comporte un carter de soufflante 206. Le moteur 20 est matérialisé ici par son cône avant et sa soufflante 22 à l'intérieur de l'entrée d'air de la nacelle 102.

Dans la description qui suit, et par convention, on appelle X l'axe longitudinal du turboréacteur double flux 100 qui est parallèle à l'axe longitudinal de l'aéronef 10 ou axe de roulis, et orienté positivement vers l'avant du turboréacteur double flux 100, on appelle Y l'axe transversal qui est parallèle à l'axe de tangage de l'aéronef qui est horizontal lorsque l'aéronef est au sol, et Z l'axe vertical qui est parallèle à l'axe de lacet lorsque l'aéronef est au sol, ces trois directions X, Y et Z étant orthogonales entre elles et formant un repère orthonormé ayant pour origine le centre de gravité du turboréacteur double flux 100. Dans la description qui suit, les termes relatifs à une position sont pris en référence à l'avant et à l'arrière du turboréacteur 100 qui correspond également à l'avant et à l'arrière de l'aéronef 10.

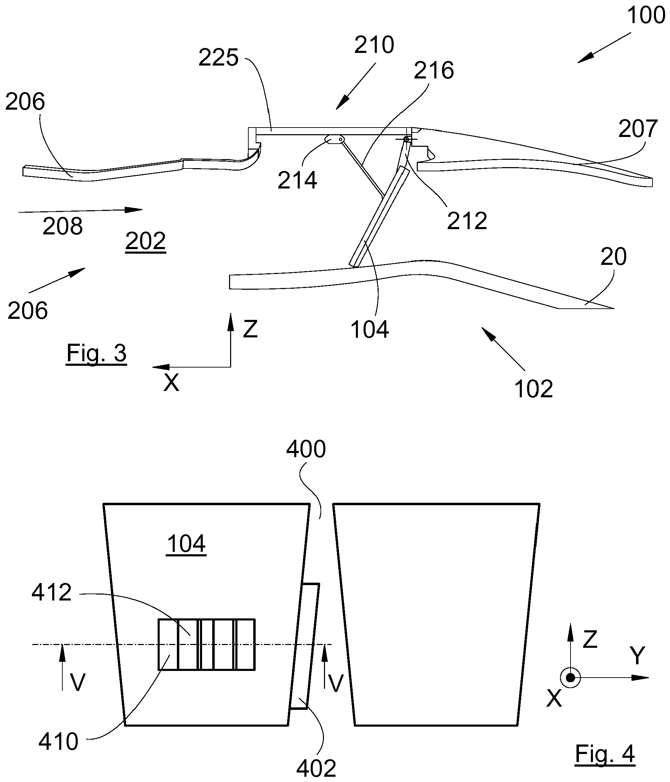

La Fig. 3 montre la nacelle 102 en coupe et en position déployée des volets inverseurs.

Le turboréacteur double flux 100 présente entre la nacelle 102 et le moteur 20, une veine 202 dans laquelle circule le flux secondaire 208 provenant de l'entrée d'air à travers la soufflante 22 et qui s'écoule donc selon un sens d'écoulement qui va de l'avant vers l'arrière.

La nacelle 102 présente une structure fixe qui intègre entre autres le carter de soufflante 206.

La nacelle 102 présente un capot arrière 207 formant les parois de la tuyère. La nacelle 102 porte des volets inverseurs 104 et elle présente une structure ajourée formant des fenêtres 210 (Fig. 3) autour des volets inverseurs 104.

La nacelle 102 comporte ainsi une pluralité de volets inverseurs 104 répartis sur la périphérie et à l'intérieur de la nacelle 102 en fonction de l'ouverture angulaire de la fenêtre 210 autour de l'axe longitudinal X.

Chaque volet inverseur 104 est monté articulé sur la structure de la nacelle 102 entre une position stockée et une position déployée et inversement. Le passage de la position stockée à la position déployée s'effectue par une rotation du volet inverseur 104 vers l'intérieur du turboréacteur 100.

En position stockée, chaque volet inverseur 104 n'est pas dans la veine secondaire 202 et obture une zone de la fenêtre 210. En position déployée, le volet inverseur 104 est en travers de la veine secondaire 202 et n'obture pas la fenêtre 210 permettant le passage du flux secondaire 208 et le volet inverseur 104 s'étend alors vers le moteur 20.

Des grilles 225 peuvent être prévues en travers de la fenêtre 210 pour orienter le flux d'air dévié vers l'avant.

Chaque volet inverseur 104 est articulé par un bord aval, par rapport au sens d'écoulement, à la structure de la nacelle 102 sur des charnières 212 tandis que le bord libre opposé se positionne vers l'amont en position stockée et vers le moteur 20 en position déployée.

Le passage de la position stockée à la position déployée et inversement est réalisé par tous moyens appropriés connus de l'homme du métier. Dans le mode de réalisation de l'invention présenté ici, la nacelle 102 comporte pour chaque volet inverseur 104, un chariot 214 monté mobile en translation par rapport à la structure de la nacelle 102 parallèlement à l'axe longitudinal X, une tringle 216 montée articulée entre le chariot 214 et le volet inverseur 104, et un système d'activation, comme par exemple un vérin, qui est prévu pour déplacer le chariot 214 vers l'avant et vers l'arrière de manière à faire passer le volet inverseur 104 de la position stockée à la position déployée et inversement.

La Fig. 4 montre des volets inverseurs 104 en position déployée. Lorsque deux volets inverseurs 104 sont l'un à côté de l'autre, ils sont à distance l'un de l'autre pour préserver un espace 400 qui permet un fonctionnement sans risque d'interaction entre eux.

Cet espace 400 ouvre donc une voie pour une partie du flux d'air secondaire 208 qui peut traverser cet espace 400 et s'écouler jusqu'à la tuyère d'éjection du turboréacteur 100. L'espace 400 forme ainsi une fenêtre de fuite 400 à travers laquelle une partie du flux d'air secondaire 208 s'écoule en position déployée.

Comme cela est montré à la Fig. 4, au moins un volet inverseur 104 comporte une fenêtre de fuite 400, 410 prévue pour autoriser l'écoulement de l'air en position déployée, et la fenêtre de fuite 400, 410 peut être une fenêtre de fuite 400 qui est constituée par l'espace qui s'étend autour du volet inverseur 104, ou une fenêtre de fuite 410 qui est réalisée par un trou qui traverse ledit volet inverseur 104. Bien sûr, il est possible d'avoir l'une ou l'autre de ces fenêtres de fuite 400, 410, ou l'une et l'autre.

Afin de limiter la puissance de la partie du flux secondaire 208 qui traverse la fenêtre de fuite 400, 410, des moyens pour générer des tourbillons à l'arrière du volet inverseur 104 sont disposés à travers ladite fenêtre de fuite 400.

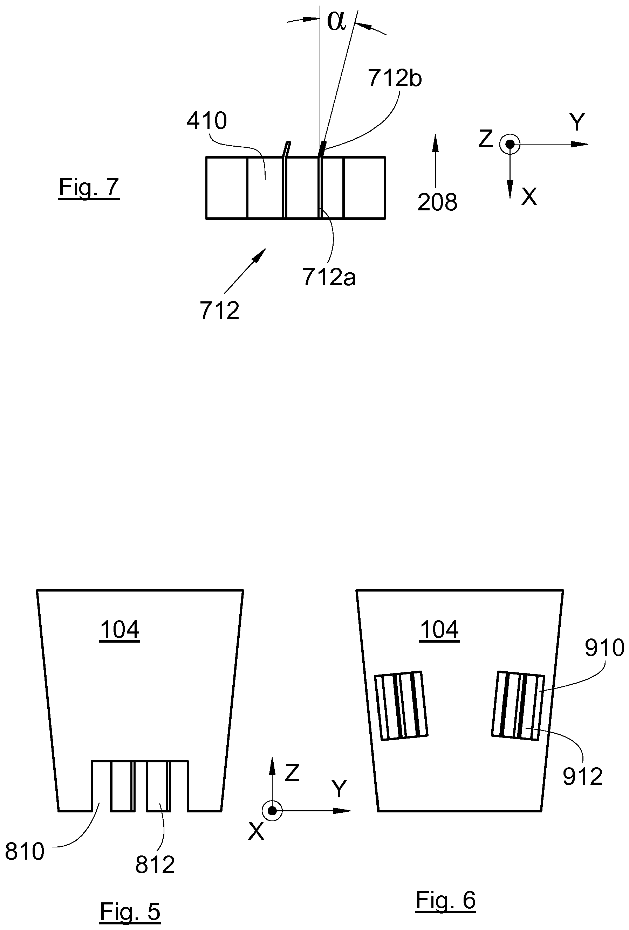

La Fig. 7 montre une vue en coupe du volet inverseur 104.

Les moyens pour générer des tourbillons prennent la forme d'ailettes 402, 412 qui s'étendent en travers de ladite fenêtre de fuite 400, 410. La génération de tourbillons par les ailettes 402, 412 perturbe le flux d'air qui perd de la puissance.

La Fig. 5 montre une variante de position de la fenêtre de fuite. Dans ce mode de réalisation de l'invention, la fenêtre de fuite 810 prend la forme d'une encoche qui traverse ledit volet inverseur 104 au niveau du bord aval du volet inverseur 104. Des ailettes 812 sont également en travers de la fenêtre de fuite 810.

La Fig. 6 montre une variante où le nombre de fenêtres de fuite et les positions des fenêtres de fuite varient. Dans ce mode de réalisation de l'invention, il y a deux fenêtres de fuite 910 et chaque fenêtre de fuite 910 est réalisée par un trou qui traverse ledit volet inverseur 104 et qui comme pour la Fig. 4 est disposé au niveau d'une partie centrale du volet inverseur 104, c'est-à-dire hors des bords du volet inverseur 104. Des ailettes 912 sont également en travers de la fenêtre de fuite 910.

La Fig. 5 montre un type d'ailettes selon l'invention qui peut être utilisées en travers d'une fenêtre de fuite réalisée par un trou qui traverse ledit volet inverseur 104. Ces différents types d'ailettes peuvent également être mis en oeuvre dans le cadre des fenêtres de fuite des Figs. 5 et 6.

Le plan du volet inverseur 104 est le plan milieu entre les plans des faces percées du volet inverseur 104.

Dans le mode de réalisation de la Fig. 7, chaque ailette 712 prend la forme d'un premier plan 712a et d'un deuxième plan 712b qui est dans le prolongement du premier plan 712a. Le premier plan 712a est perpendiculaire au plan du volet inverseur 104 et est limité par les faces percées du volet inverseur 104 et le deuxième plan 712b est incliné par rapport au plan du volet inverseur 104 et il s'étend à partir et au-delà de la face percée du volet inverseur 104 qui est orientée vers l'arrière.

Bien sûr, en fonction des besoins, il est possible de combiner les différents modes de réalisation décrits ci-dessus, par exemple en combinant différents types de fenêtres de fuite, en disposant plusieurs fenêtres de fuite par volet inverseur 104, en utilisant différents types d'ailettes.

L'invention a été plus particulièrement décrite dans le cas d'une nacelle sous une aile mais elle peut s'appliquer à une nacelle située à l'arrière du fuselage.

Dans le mode de réalisation de l'invention présenté ici, les volets inverseurs 104 sont montés uniquement mobiles en rotation, mais il est possible de prévoir que les volets inverseurs soient montés sur un coulisseau mobile en translation et solidaire du capot arrière 207. Le passage en position déployée est alors précédé par un recul du coulisseau mobile et du capot arrière 207.

La surface de la fenêtre de fuite 400, 410, 810, 910 est préférentiellement comprise entre 5% et 30% de la surface du volet inverseur 104.

Dans le mode de réalisation de la Fig. 7, l'angle α entre le premier plan 712a et le deuxième plan 712b est préférentiellement compris entre 5° et 45°.

Dans le mode de réalisation de la Fig. 7, la longueur du plan 712b qui est au-delà de la face percée du volet inverseur 104 qui est orientée vers l'arrière est préférentiellement comprise entre 5mm et 30mm.

## Revendications

1. Turboréacteur double flux (100) comportant un moteur (20) et une nacelle (102) entourant le moteur (20), où une veine (202) d'un flux secondaire (208) est délimitée entre la nacelle (102) et le moteur (20) et dans laquelle un flux d'air circule, ladite nacelle (102) comportant des volets inverseurs (104) où chacun est articulé entre une position stockée dans laquelle il n'est pas dans la veine secondaire (202) et une position déployée dans laquelle il est en travers de la veine secondaire (202), où au moins un volet inverseur (104) présente au moins une fenêtre de fuite (410, 810, 910) prévue pour autoriser l'écoulement de l'air en position déployée, où ledit au moins un volet inverseur (104) présente au moins une ailette (712) s'étendant en travers de ladite fenêtre de fuite (410, 810, 910), où la fenêtre de fuite (410, 910, 810) est réalisée par un trou qui traverse ledit volet inverseur (104), le turboréacteur double flux (100) étant **caractérisé en ce que** chaque ailette (712) prend la forme d'un premier plan (712a) et d'un deuxième plan (712b) dans le prolongement du premier plan (712), **en ce que** le premier plan (712a) est perpendiculaire au plan du volet inverseur (104) et est limité par les faces percées du volet inverseur (104), et **en ce que** le deuxième plan (712b) est incliné par rapport au plan du volet inverseur (104) et il s'étend à partir et au-delà de la face percée du volet inverseur (104) qui est orientée vers l'arrière.

2. Turboréacteur double flux (100) selon la revendication 1 **caractérisé en ce que** la fenêtre de fuite (810) prend la forme d'une encoche qui traverse ledit volet inverseur (104) au niveau d'un bord aval du volet inverseur (104).

3. Turboréacteur double flux (100) selon la revendication 1 **caractérisé en ce que** la fenêtre de fuite (410, 910) est réalisée par un trou qui traverse ledit volet inverseur (104) au niveau d'une partie centrale du volet inverseur (104).

4. Aéronef (10) comportant au moins un turboréacteur double flux (100) selon l'une des revendications précédentes.
